# EUROPÄISCHE PATENTSCHRIFT

(11) **EP 3 524 877 B1**
(45) Veröffentlichungstag und Bekanntmachung des Hinweises auf die Patenterteilung: **20.07.2022**
(21) Anmeldenummer: 19000073.7
(22) Anmeldetag: 07.02.2019
(51) Int. Cl.: F21V 8/00, G02B 6/04, B60Q 3/62

(54) **BELEUCHTUNGSVORRICHTUNG MIT EINEM SEITENEMITTIERENDEN LICHTLEITENDEN FASERBÜNDEL**
LIGHTING DEVICE WITH SIDE-EMITTING LIGHT CONDUCTING FIBRE BUNDLE
DISPOSITIF D'ÉCLAIRAGE DOTÉ D'UN FAISCEAU DE FIBRES PHOTOCONDUCTEUR À EMISSION LATÉRALE

(30) Priorität: 08.02.2018 DE 102018001029
(43) Veröffentlichungstag der Anmeldung: 14.08.2019
(73) Patentinhaber: MENTOR GmbH & Co. Präzisions-Bauteile KG, 40699 Erkrath (DE)
(72) Erfinder: Kretschmer, Stefan, 40699 Erkrath (DE); Kümpfel, Thomas, 40764 Langenfeld (DE); Gräbel, Uwe, 42781 Haan (DE)
(74) Vertreter: Henseler, Daniela

(56) Entgegenhaltungen:
- EP-A1- 3 270 050
- WO-A1-2012/083957
- DE-A1-102007 014 871
- US-A1- 2004 218 858

## Beschreibung

Die Erfindung betrifft eine Beleuchtungsvorrichtung mit einem seitenemittierenden lichtleitenden Faserbündel und mit einem Lichtmischer zum Einkoppeln von Licht einer Lichtquelle in das Faserbündel nach dem Oberbegriff des Anspruchs 1.

Aus EP 3 270 050 A1 ist eine gattungsgemäße Beleuchtungsvorrichtung bekannt.

Aus DE 10 2010 046 342 B4 ist eine Beleuchtungsvorrichtung mit einer Kopplungsvorrichtung zur Einkopplung von Licht eines Leuchtmittels in einen Lichtleiter eines Fahrzeugs bekannt. Der Lichtleiter kann sich dabei aus einem Glasfaserbündel zusammensetzen. Für die Beleuchtung des Innenraums eines Kraftwagens werden zunehmend Lichtleiter eingesetzt, welche das Licht einer Lichtquelle sehr variabel an verschiedene Orte im Innenraum des Kraftwagens weiterleiten können. In der Regel werden die Lichtleiter durch Glasfasern gebildet, während als Lichtquelle zunehmend moderne Leuchtmittel, wie z.B. LEDs, Verwendung finden. Für eine hohe Lichtausbeute ist es erforderlich, das Licht der Lichtquelle möglichst effizient in den Lichtleiter einzukoppeln. Üblicherweise befindet sich die Lichtquelle direkt an der Stirnfläche des Lichtleiters, so dass das Licht senkrecht auf die Lichtleiterfläche auftritt. Das Licht der Lichtquelle trifft dann nur in der Mitte des Lichtleiters ideal auf. Je entfernter das Licht von der Mitte auftritt, desto ungünstiger werden die Einkopplungswerte. Werden als Lichtquelle mehrfarbige LEDs verwendet, so kann sich eine schlechte Farbmischung ergeben. Die Kopplungsvorrichtung umfasst daher einen Hohlkörper mit einer zumindest teilweise reflektierenden Innenwand, wobei die Innenwand unterschiedliche Reflexionskoeffizienten für verschiedene Lichtfarben aufweisen kann. Nachteilig ist jedoch, dass trotz allem das ausgestrahlte Licht keine hinreichende Homogenität hinsichtlich Farbe und Intensität aufweist.

Aus DE 10 2007 014 871 A1 ist eine Beleuchtungseinrichtung für Fahrzeuge bekannt, die mindestens zwei Halbleiter-Lichtquellen umfasst, die Licht mit unterschiedlichen Farben abstrahlen. Eintrittsseitig zu einem Lichtleiter ist eine Lichtmischereinrichtung vorgesehen, die das Licht der Lichtquellen vermischt. Der Lichtmischer ist hier vorzugsweise ein transparenter monolithischer Körper, der einen Eintrittsbereich und einen Austrittsbereich aufweist, um mit einem einzigen Bauteil das Licht mehrerer LEDs zu mischen. Der monolithische Körper kann im Spritzgussverfahren hergestellt werden, so dass beliebige Formen hergestellt werden können. Die Strahlengänge der LEDs überlagern sich zumindest abschnittsweise innerhalb des Körpers. Vorzugsweise verjüngt sich der Körper vom Eintrittsbereich zum Austrittsbereich, jeder LED ist ein Eintrittsbereich zugeordnet, wobei der Eintrittsbereich eine Linsenform, insbesondere eine Sammellinsenform aufweist. Eine Intensitätsverstärkung des Lichts zum Ausgangsbereich hin soll erreicht werden, wobei die Linsen im Eingangsbereich das Licht fokussieren sollen, um Verluste zu vermeiden. Die hierfür notwendige Beabstandung der LEDs voneinander ist nachteilig.

Aus DE 10 2015 106 049 B4 ist eine Beleuchtungsvorrichtung mit einem seitenemittierenden Lichtleiter bekannt, bei der eine Hülse verwendet wird, um ein seitenemittierendes Faserbündel zu terminieren und das Licht von LEDs in das Faserbündel einzukoppeln. Um das Licht der LEDs in das Faserbündel einzukoppeln war es bekannt, das Ende des Faserbündels in einem Hüllenmaterial einzubetten, welches ausgehärtet wird. Sodann wird das Ende des eingehüllten Faserbündels abgeschnitten und poliert, so dass sich eine Lichteintrittsfläche ausbildet. Da diese Vorgehensweise sehr aufwändig ist, ist vorgesehen, eine Hülse mit einem Hülsenboden zu verwenden, also eine topfförmige Hülse, in die das Faserbündel eingesetzt wird. Es wird dann durch den Hülsenboden Licht einer Lichtquelle in das Faserbündel eingekoppelt. Vorzugsweise wird das vom Schlauch befreite, aber nicht polierte Faserbündel in den vorher mit einem transparenten Klebstoff gefüllten Hülsentopf eingeführt, und der Klebstoff wird ausgehärtet, wobei es gleichzeitig zu einer mechanischen Fixierung des Faserbündels kommt. Um die Einkopplungseffektivität zu verbessern, kann die Brechzahl des Klebstoffs an die Brechzahl des Kerns der seitenemittierenden Fasern des Faserbündels angepasst sein. Bevor das Licht durch den Boden der Hülse in die Fasern einkoppelt, durchläuft es vorher einen Lichtmischer in Form eines Fortsatzes, in dem es mehrfach zu Totalreflexionen kommt, so dass sich das Licht unterschiedlicher Lichtfarben, insbesondere bei Verwendung einer RGB-LED, mischen kann. Die erreichte Homogenität des Lichts ist allerdings nur gering, so dass Farbunterschiede und/oder Intensitätsschwankungen vorhanden sind.

Der Erfindung liegt daher die Aufgabe zugrunde, eine Beleuchtungsvorrichtung zu schaffen, die einfach aufgebaut ist und bei der die Homogenität des Lichts hinsichtlich Farbe und/oder Intensität verbessert ist.

Diese Aufgabe wird durch die Merkmale des Anspruchs 1 gelöst.

Hierdurch wird eine Beleuchtungsvorrichtung geschaffen, die mit wenig Aufwand den Lichtmischer derart verbessert, dass eine Fokussierung des Strahlenverlaufs bei signifikant reduziertem Verlust erreicht wird. Zum einen wird nämlich eine bessere Durchmischung des Lichts, z.B. des Rot-, Grün- und Blau-Anteils einer RGB-LED, und zum anderen eine Reduzierung der Verluste bei der Einkopplung in einen Zielquerschnitt erreicht, welcher vorzugsweise kleiner als der Querschnitt der Emitterfläche ist.

Weitere Vorteile und Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch einen Schnitt einer Beleuchtungsvorrichtung gemäß einem ersten Ausführungsbeispiel, das nicht Teil der Erfindung ist,
Fig. 2 zeigt schematisch einen Strahlenverlauf in einem Lichtmischer einer Beleuchtungsvorrichtung nach Fig. 1,
Fig. 3 zeigt schematisch eine perspektivische Ansicht eines Lichtmischers einer Beleuchtungsvorrichtung nach Fig. 1,
Fig. 4 zeigt schematisch einen Längsschnitt eines Lichtleiters eines Lichtmischers einer Beleuchtungsvorrichtung nach Fig. 1,
Fig. 5 zeigt schematisch einen Schnitt einer Beleuchtungsvorrichtung gemäß einem zweiten Ausführungsbeispiel,
Fig. 6 zeigt schematisch einen Schnitt einer Beleuchtungsvorrichtung gemäß einem dritten Ausführungsbeispiel, das nicht Teil der Erfindung ist,
Fig. 7 zeigt schematisch einen Schnitt einer Beleuchtungsvorrichtung gemäß einem vierten Ausführungsbeispiel, das nicht Teil der Erfindung ist,
Fig. 8 zeigt schematisch einen Schnitt einer Beleuchtungsvorrichtung gemäß einem fünften Ausführungsbeispiel,
Fig. 9 zeigt schematisch einen Schnitt einer Beleuchtungsvorrichtung gemäß einem sechsten Ausführungsbeispiel,
Fig. 10 zeigt schematisch einen Schnitt einer Beleuchtungsvorrichtung gemäß einem siebten Ausführungsbeispiel,
Fig. 11 zeigt schematisch einen Schnitt einer Beleuchtungsvorrichtung gemäß einem achten Ausführungsbeispiel,
Fig. 12 zeigt schematisch einen Schnitt einer Beleuchtungsvorrichtung gemäß einem neunten Ausführungsbeispiel, das nicht Teil der Erfindung ist,
Fig. 13 zeigt schematisch einen Schnitt einer Beleuchtungsvorrichtung gemäß einem zehnten Ausführungsbeispiel, das nicht Teil der Erfindung ist,
Fig. 14 zeigt schematisch einen Schnitt einer Beleuchtungsvorrichtung gemäß einem elften Ausführungsbeispiel, das nicht Teil der Erfindung ist.

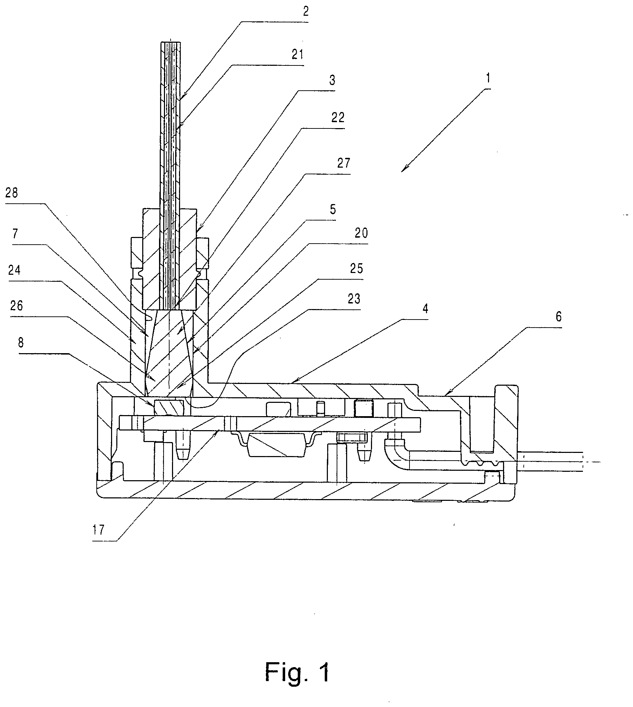

Wie Fig. 1 bis Fig. 4 zeigen, betrifft die Erfindung eine Beleuchtungsvorrichtung 1 mit einer in einem Gehäuse 6 angeordneten Lichtquelle 8, die Licht über einen einen kompakten Lichtleiter 5 aufweisenden Lichtmischer 20 in ein seitenemittierendes, in einen Schlauch 2 eingebrachtes Faserbündel 21 einkoppelt. Dazu sind die Fasern des Faserbündels 21 an ihrem einen Faserende 22 gegenüber dem Lichtmischer 20 fixiert, und die Lichtquelle 8 ist zur Stirnfläche 23 des Lichtmischers 20 positioniert.

Es ist vorgesehen, dass das Gehäuse 6 einen von der Lichtquelle 8 bestrahlbaren Hohlkörper-Ausleger 24 aufweist, in den ein Lichtleiter 5 des Lichtmischers 20 eingebaut ist, der auf seiner Gesamtlänge mindestens drei verschiedene Regionen 25, 26, 27 mit unterschiedlichen optischen Reflexions- oder Übertragungseigenschaften aufweist. Beispielsweise ändert sich zwischen den Regionen 25, 26, 27 nur die Neigung der Randflächen. Damit sind dann tatsächlich andere Reflexionswinkel verbunden. Dabei können sowohl das Material als auch die Oberfläche gleich bleiben und insoweit die Übertragungseigenschaften nicht ändern.

Der Hohlkörper-Ausleger 24 ist dabei lichtundurchlässig ausgebildet, während der Lichtleiter 5 transparent ausgebildet ist.

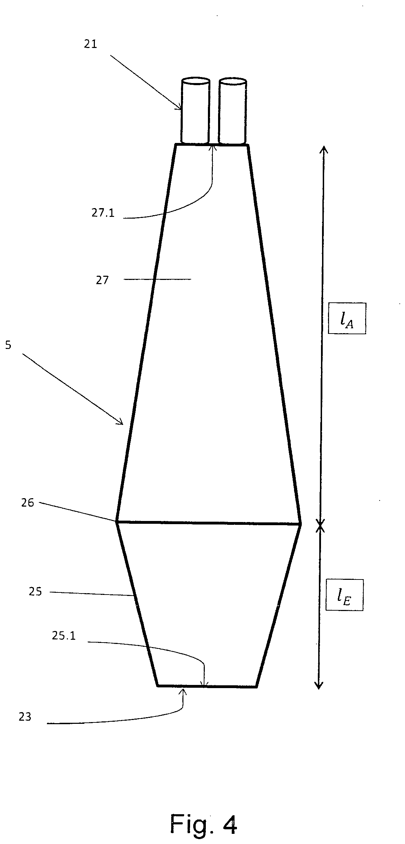

Wie insbesondere Fig. 4 zeigt, ist der Lichtleiter 5 ferner mit einem in Richtung der Lichtquelle 8 liegenden ersten Ende 25.1 einer ersten Region 25, einem in Richtung des Faserbündels 21 liegenden zweiten Ende 27.1 einer zweiten Region 27 und einem dazwischenliegenden Übergangsbereich einer dritten Region 26 ausgebildet.

Wie weiterhin in den Fig. 1 bis Fig. 4 dargestellt ist, ist der Lichtleiter 5 keulenförmig ausgebildet. Das erste Ende 25.1 weist dann eine erste Nennweite qE auf, die größer ist als eine zweite Nennweite qA des zweiten Endes 27.1, und die erste qE und die zweite qA Nennweite sind dann vorzugsweise kleiner als eine dritte Nennweite qV des Übergangsbereichs der dritten Region 26 mit einer maximalen Verdickung einer Außenkontur des Lichtleiters 5.

Der Lichtleiter 5 kann aus einem festen Material oder einem festen Außenmaterial und einem mit Fluid oder Gel gefüllten Innenraum bestehen. Entscheidend ist, dass der Lichtleiter 5 zur Reflexion der durch ihn hindurchtretenden Lichtstrahlen durch innere Totalreflexion ausgeführt ist. Dazu besitzt der Lichtleiter 5 bedingt durch das verwendete Material einen entsprechend hohen Brechungsindex des Materials, der vorzugsweise im Bereich von 1,4 bis 1,8 liegt. Geeignete Materialien sind Glas oder Plastwerkstoffe, deren Konsistenz wählbar ist. Es können auch optisch wirksame Beschichtungen auf den Lichtleiter 5 aufgebracht sein. Entscheidend ist vorzugsweise, dass die im Lichtleiter 5 stattfindende, durch seine Form und sein Material bedingte Totalreflexion den Anforderungen der Zielsetzung hinsichtlich Durchmischung des Lichts und der Maximierung der Effizienz gerecht wird.

Wesentlich für die optischen Reflexions- oder Übertragungseigenschaften des Lichtleiters sind darüber hinaus die erfindungsgemäß für den Lichtleiter 5 gewählten verschiedenen Regionen 25, 26, 27, die sich in ihrer Raumform unterscheiden, um auf die Richtung der im Lichtleiter 5 reflektierten Lichtstrahlen einzuwirken.

Wie beispielsweise Fig.4 zeigt, bildet die erste Region 25 bedingt durch einen axial sich erweiternden Querschnitt eine Reflexionszone, damit beispielsweise die Anzahl an Reflexionen erhöht wird, was sich vorteilhaft auf eine Mischung unterschiedlicher Lichtfarben auswirkt. Die erste Region 25 kann also schüsselartig zur Optimierung des Strahleneingangs genutzt werden. Im Übergangsbereich der dritten Region 26 wird eine maximale Nennweite qV erreicht, deren axiale Erstreckung wiederum wählbar ist, um dem Lichtleiter 5 einen mittigen stabförmigen Abschnitt zu verleihen. Hin zum zweiten Ende 27.1 verjüngt sich der Querschnitt des Lichtleiters 5 in der zweiten Region 27. Ein sogenannter Trichtereffekt wird begründet, der dazu dient, das Licht zu richten in Bezug auf das zweite Ende 27.1 zur Einkopplung in das Faserende 22.

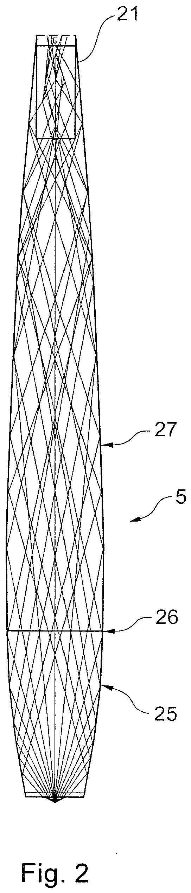

Fig. 2 zeigt den Lichtstrahlenverlauf für den vorstehend beschriebenen Lichtleiter 5 und verdeutlicht die Einkopplung von Licht in die Faserenden 22 mit erhöhter Intensität. Wie im Strahlenverlauf gemäß Fig. 2 gezeigt, führt die Verbreiterung in der ersten Region 25 bis hin zur dritten Region 26 mit einer dritten Nennweite zu einer Fokussierung auf das Ende 27.1 der zweiten Region 27 und damit auf ein Ende der von dem Lichtmischer 20 gebildeten Mischlinse. Eine größere Nennweite des ersten Endes 25.1 gegenüberliegend der Lichtquelle 8 kann so genutzt werden zur optimalen Einkopplung des Lichts in den Lichtleiter 5, da die Querschnittsveränderung hin zu einer kleineren Nennweite der zweiten Region 27 dann zu keinem signifikanten Intensitätsverlust mehr führt. Vorteilhaft ist insoweit, dass die dritte Nennweite qV des Übergangsbereichs in der dritten Region 26 maximal das 1,5-fache der ersten Nennweite qE der ersten Region 25 und damit der Nennweite der Einkopplung an der Lichtquelle 8 beträgt.

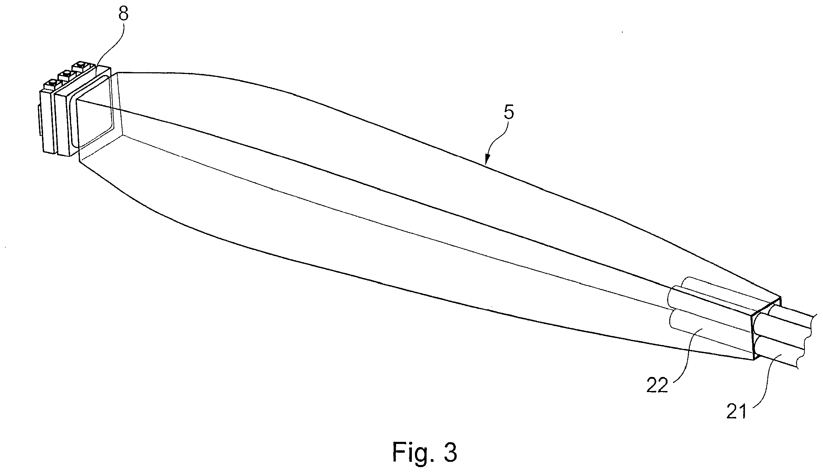

Wie Fig. 3 zeigt, kann der Lichtleiter 5 alternativ auch eine quaderförmige Raumform besitzen, wobei jedoch die zuvor beschriebenen Gestaltungsvarianten zur ersten, zweiten und dritten Nennweite der Regionen 25, 26, 27 unverändert gelten. Der Lichtleiter 5 sollte in seiner Funktion als Mischlinse nämlich mindestens zwei Anforderungen erfüllen: Zum einen die Gewährleistung einer hinreichenden Farbmischung auf möglichst kurzer Strecke und zum anderen eine Steigerung der Effizienz bei einer Reduzierung des Querschnitts vom ersten Ende 25.1 (Einkopplungsquerschnitt) zum zweiten Ende 27.1 (Austrittsquerschnitt).

Vorzugsweise sind die drei vorstehend beschriebenen Nennweiten von derselben Form, was aber nicht zwingend erforderlich ist. Mögliche Querschnittsformen sind unter anderem quadratisch, rund, elliptisch, trigonal, tetragonal, pentagonal, hexagonal, heptagonal usw.

Eine Gesamtlänge des Lichtleiters 5 des Lichtmischers 20 ist vorzugsweise ausgebildet mit einer Länge LE der ersten Region 25 und einer Länge LA der zweiten Region 27. Das Längenverhältnis dieser Regionen 25, 27 kann derart aufgeteilt sein, dass beispielsweise die zweite Region 27 das 3- bis 6-fache an Länge der ersten Region 25 besitzt. Die dritte Region 26 kann als Übergangsbereich der maximalen Verdickung auf eine Übergangsebene beschränkt sein, wie in Fig. 4 dargestellt ist. Alternativ kann die Region 26 eine Länge zwischen der ersten Region 25 und der zweiten Region 27 definieren. Hinsichtlich der Nennweiten qE, qA und qV ist beispielsweise vorgesehen, dass die dritte Nennweite qV im Übergangsbereich der dritten Region 26 vorzugsweise weniger als das 3-fache der zweiten Nennweite qA des zweiten Endes 27.1 im Bereich der Auskopplungsfläche des Lichtleiters 5 beträgt. Bei den in Fig. 2 und Fig. 3 gezeigten Ausführungsbeispielen des Lichtleiters 5 ist vorgesehen, dass die dritte Nennweite qV weniger als das 2-fache der zweiten Nennweite qA des zweiten Endes 27.1 im Bereich der Auskopplungsfläche beträgt. Hierdurch wird eine Optimierung bezüglich einer Reduzierung der Querschnittsveränderungen erreicht.

Wie weiterhin in Fig. 1 dargestellt ist, ist der Lichtleiter 5 auf seiner Gesamtlänge mindestens teilweise beabstandet zu einer Innenwandung 28 des Hohlkörper-Auslegers 24 positioniert. Dies dient zur Ausbildung eines Luftraumes 7 zwischen einer Außenfläche des Lichtleiters 5 und der Innenwandung 28 des Hohlkörper-Auslegers 24 für eine Lichtreflexion im Lichtleiter 5 an dessen Außenkonturflächen. Erfindungsgemäß kann folglich vorgesehen sein, dass der Lichtleiter 5 durch seine axialen Querschnittsveränderungen zwischen erster, zweiter und dritter Nennweite qE, qA und qV im Zusammenspiel mit dem Hohlkörper-Ausleger 24 und dessen Innenraum ein optisches System bildet. Es ist dann besonders wichtig, dass der Lichtleiter 5 als mischende Komponente auf seiner Länge nur partiell stofflich verbunden ist mit dem Hohlkörper-Ausleger 24, um eine Brechung über die Außenfläche des Lichtleiters 5 an der Luft 7, gekapselt im Hohlkörper-Ausleger 24, zu erhalten.

Vorteilhaft ist weiterhin, wenn wie in Fig. 1 dargestellt, der Lichtleiter 5 mit seinem zweiten Ende 27.1 faserseitig eine Stirnfläche aufweist, die direkt stoßseitig am einen Ende des Faserbündels 21 anschließt. Das Faserbündel 21 kann an diesem Ende auch in den Lichtleiter 5 eingebunden sein.

Die vorstehend beschriebene Beleuchtungsvorrichtung 1 ist also derart ausgebildet, dass einfarbige oder mehrfarbige Lichtquellen 8, insbesondere LEDs, beispielsweise RGB LEDs, gemischtes Licht in eine seitenlichtemittierende Schlauchfaser 2, welche aus einer oder vielen einzelnen Glas- oder Polymerfasern bestehen kann, emittiert. Die Fasern 21 können überzogen sein mit oder auch ohne einen diffusen Schlauch, welcher mit einem Verschlusselement 3, beispielsweise einer Ferrule, die Fasern 21 an ihren einem Faserende 22 oder auch an beiden Faserenden fixieren kann. Licht, beispielsweise RGB Licht, wird über das Gehäuse 6, welches vorzugsweise eine lichtundurchlässige Komponente 4 und den transparenten Lichtleiter 5 umfasst, in die Faserenden 22 gemischt eingekoppelt. Durch den transparenten Lichtleiter 5 kann über dessen Länge und Form eine Durchmischung der beispielsweise drei Grundfarben erreicht werden, der somit Licht direkt und gleichfarbig in das Faserbündel 21 übergeben kann. Der Einbau des Lichtleiters 5 unter Bereitstellung eines zumindest partiellen Luftmantels führt zur vorteilhaften Brechung über die Außenfläche des Lichtleiters 5.

Das ausgangsseitig des Hohlkörper-Auslegers 24 einbringbare rohrförmige, das Faserbündel 21 aufnehmende Verschlusselement 3 kann genutzt werden, das eine Ende 22 des Faserbündels 21 stoßseitig gegenüber dem in dem Hohlkörper-Ausleger 24 eingangsseitig eingebrachten Lichtmischer 20 zu positionieren. Das Verschlusselement 3 und der Lichtmischer 20 können in den Hohlkörper-Ausleger 24 einrastbar sein.

Die Lichtquelle 8 kann auf einer Platine 17 montiert sein.

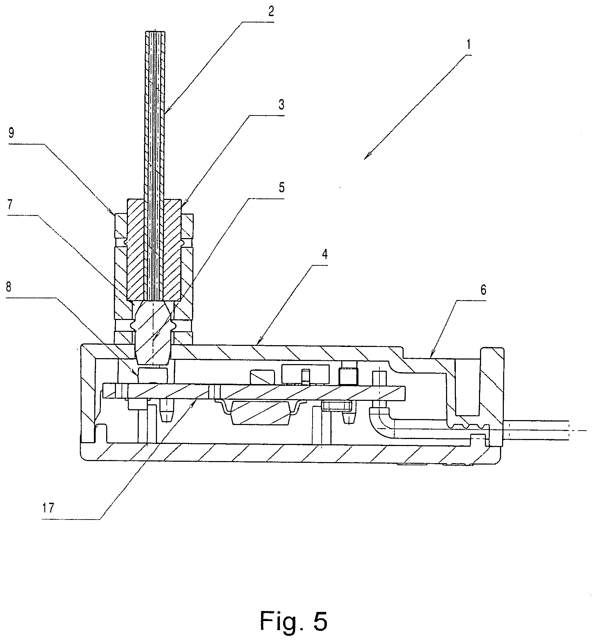

Fig. 5 zeigt ein weiteres Ausführungsbeispiel (Variante 2) einer Beleuchtungsvorrichtung 1. Abweichend von Variante 1 gemäß Fig. 1 ist der Hohlraum-Ausleger 24 nicht als ein Dom einstückig mit dem Gehäuse 6 ausgebildet, sondern kann als Adapter 9 auf das Gehäuse 6 aufrastbar sein. In diesen Adapter 9 kann das Verschlusselement (Ferrule) 3 ebenfalls durch Rastung angebunden werden. Dies hat den Vorteil, dass unterschiedliche Adapter 9 für unterschiedliche Durchmesser des Schlauchfaserbündels 2 mit geringem Kostenaufwand an das Gehäuse 6 angebunden werden können.

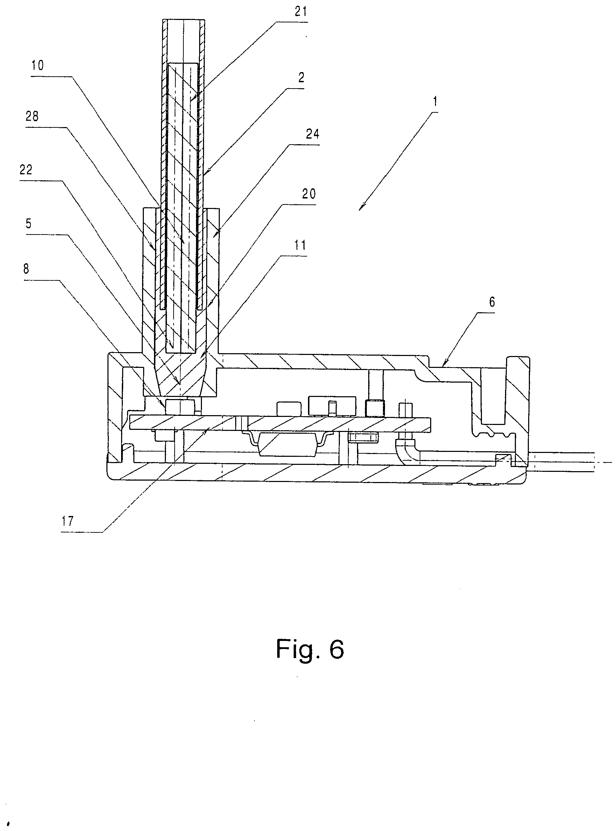

Fig. 6 zeigt ein weiteres Ausführungsbeispiel (Variante 3) einer Beleuchtungsvorrichtung 1, das nicht Teil der beanspruchten Erfindung ist. . Abweichend von Variante 1 und Variante 2 sind die Schlauchfasern 2 nicht mit einem Verschlusselement (Ferrule) 3 versehen, sondern die Anbindung des Faserendes 22 erfolgt mittels im Bündel thermisch verschweißter Fasern 10, die somit eine homogene Einheit bilden, die an das Gehäuse 6 mittels einer optischen Vergussmasse 11 angekoppelt sind. Eine optische Vergussmasse 11 bildet folglich den Lichtleiter aus, wobei dann die Anbindung des Faserbündels 21 in der Vergussmasse 11 erfolgt. Die optische Vergussmasse 11 kann mit einem Passsitz der Innenkontur 28 des Hohlkörper-Auslegers 24 folgen. Ein Silikonverguss kann als Lichtmischer 20 vorgesehen sein.

Die Fasern des Faserbündels 21 und der Lichtleiter 5 können dann als eine Einheit zum Lichtmischer 20 verschmolzen sein, der zudem in den Hohlkörper-Ausleger 24 einrastbar sein kann.

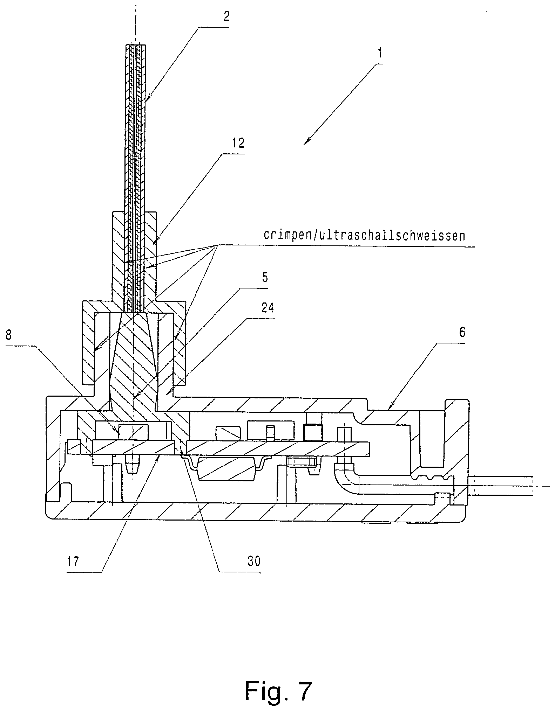

Fig. 7 zeigt ein weiteres Ausführungsbeispiel (Variante 4) einer Beleuchtungsvorrichtung 1, das nicht Teil der beanspruchten Erfindung ist. . Abweichend von Varianten 1 bis 3 wird das Schlauchfaserbündel 2 über eine Adapter-Crimphülse 12, die aus Metall oder Kunststoff bestehen kann, an das Gehäuse 6 angekoppelt. Dabei ist es durchaus möglich, dass eine Anbindung an einen Dom als Hohlkörper-Ausleger 24 einen anderen Durchmesser aufweist als das Schlauchfaserbündel 2. Weiterhin ist möglich, diesen Vorgang über ein Ultraschweißen mittels einer offenen oder geschlossenen Adapterhülse aus Kunststoff auszuführen. In dieser Variante kann ferner der Lichtleiter 5 auf der Platine 17 über der Lichtquelle 8 durch Verrastung platziert und im Dom des Hohlkörper-Auslegers 24 geführt sein. Der Lichtleiter 5 ist dazu vorzugsweise mit Rastfuß 30 ausgebildet.

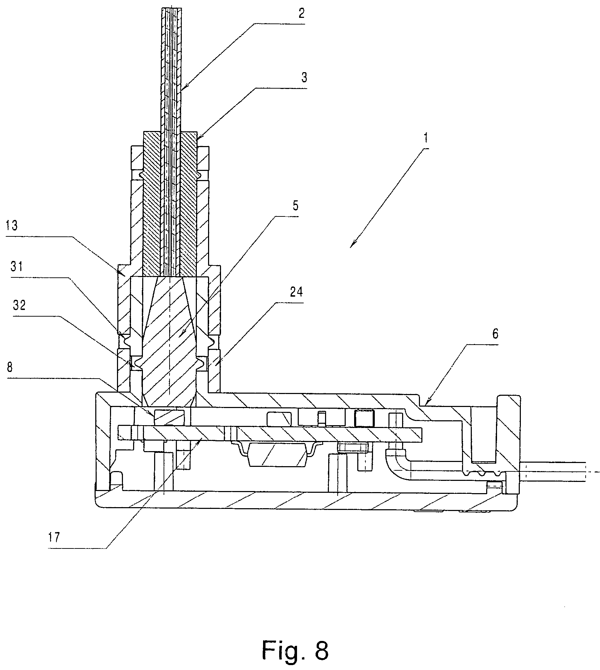

Fig. 8 zeigt ein weiteres Ausführungsbeispiel (Variante 5) einer Beleuchtungsvorrichtung 1. Abweichend von Varianten 1 bis 4 liegt bei dieser Version die Besonderheit in Folgendem. Ein außen über dem Dom des Hohlkörper-Auslegers 24 übergreifender Adapter 13 ist vorgesehen, der aufrastbar ist. Gleichzeitig ist der Lichtleiter 5 in dem Dom verrastbar. Der Dom des Hohlkörper-Auslegers 24 weist dazu Rastnasen 31 und Rastöffnungen 32 auf.

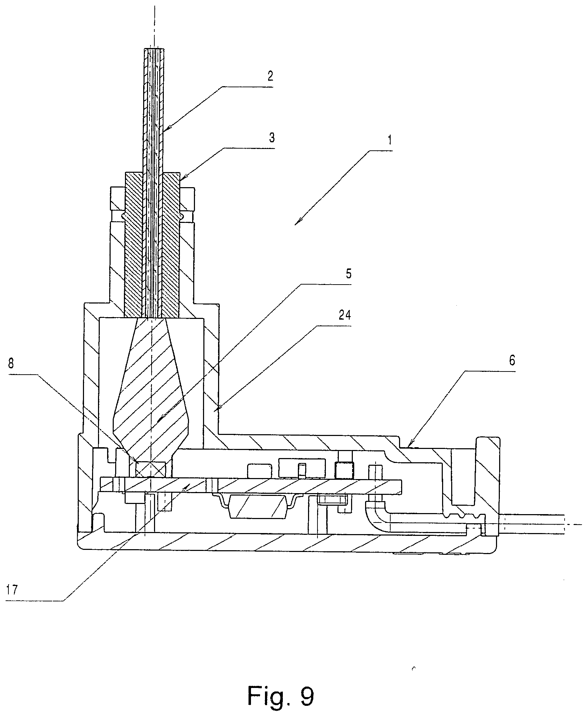

Fig. 9 zeigt ein weiteres Ausführungsbeispiel (Variante 6) einer Beleuchtungsvorrichtung 1. Abweichend von Variante 3, bei der die optische Vergussmasse mischendes und befestigendes Element ist, wird in dieser Variante die Schlauchfaser 2 mit dem Verschlusselement (Ferrule) 3 in den Dom des Hohlkörper-Auslegers 24 eingerastet. Der optische Verguss, z.B. Silikonverguss, wird als mischender Lichtleiter 5 auf der Platine 17 abgeformt und kann somit eine feste Verbindung zur Platine 17 aufweisen. Durch eine Montageeinheit Platine 17 und Lichtleiter 5 kann eine Kopplung zum Verschlusselement (Ferrule) 3 hergestellt werden.

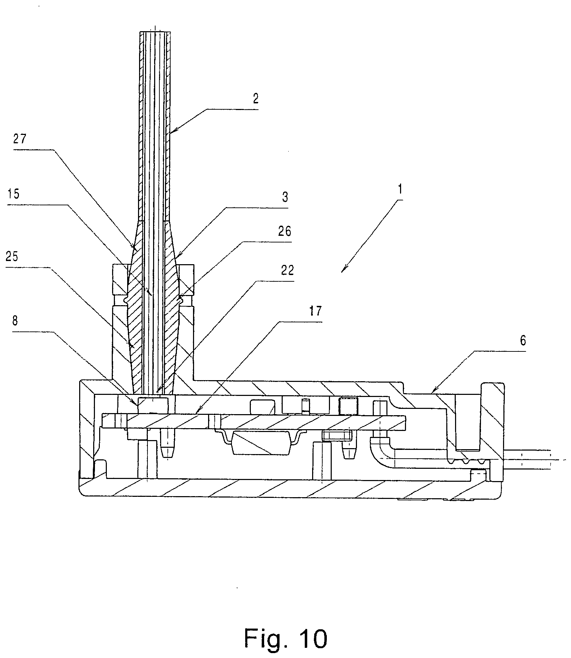

Fig. 10 zeigt ein weiteres Ausführungsbeispiel (Variante 7) einer Beleuchtungsvorrichtung 1. Wie bei den vorstehenden Varianten ausgeführt, ist das Faserbündel 21 überzogen mit einem diffusen Schlauch, der mit einer Verschlusseinrichtung (Ferrule) 3 das Faserbündel 21 an ihrem einen Faserende 22 oder auch an beiden Enden fixiert. Diese Fixierung stellt eine Besonderheit dar, wenn der Ferrulenwerkstoff durch einen Schmelzvorgang mit dem Faserwerkstoff eine Verbindung eingeht. Durch diesen Vorgang werden Ferrule 3 und Faserbündel zum mischenden Lichtleiter 5 und können als eine Einheit 15 in das Gehäuse 6 eingerastet werden. Der Schmelzprozess kann z.B. durch Ultraschweißen erfolgen aber auch durch thermische Verfahren wie z.B. Infrarotstrahlung. Der Vorteil liegt hier in der Verringerung der notwendigen Bauteile und damit auch der Minimierung der Prozessschritte. Das Verschlusselement (Ferrule) 3 weist dann vorzugsweise eine Raumform auf, die an die des mischenden Lichtleiters 5 angepasst ist, d.h. auf der Gesamtlänge sind mindestens drei verschiedene Regionen 25, 26, 27 mit unterschiedlichen Reflexions- oder Übertragungseigenschaften ausgebildet.

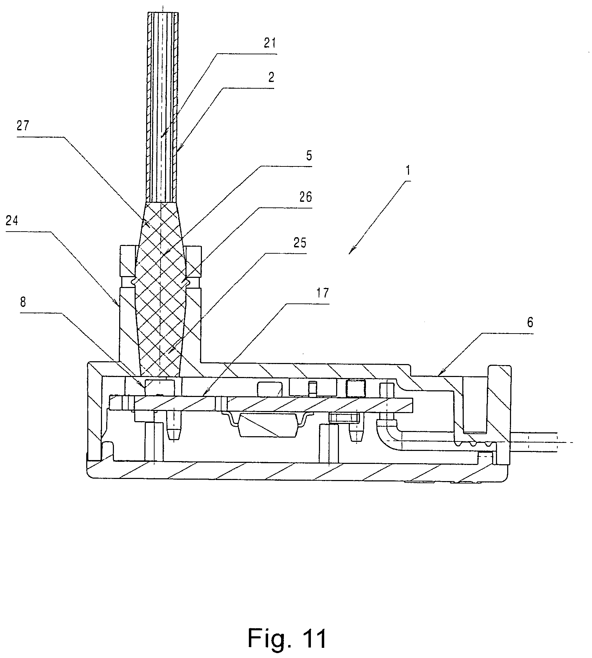

Fig. 11 zeigt ein weiteres Ausführungsbeispiel (Variante 8) einer Beleuchtungsvorrichtung 1. Auch hier ist das Faserbündel 21 überzogen mit einem diffusen Schlauch 2. Das Faserbündel wird an einem oder beiden Enden fixiert. Die Besonderheit ist hier, dass dieser Vorgang in einem Spritzgussprozess erfolgen kann, in dem die Ferrule 3 durch den Prozess gebildet wird. Dabei verschmelzen die Fasern des Faserbündels 21 mit dem Ferrulenwerkstoff, beispielsweise PMMA, PC. Der Vorteil liegt hier in der Verringerung der notwendigen Bauteile, da dieser Prozess gleichzeitig den mischenden Lichtleiter 5 erzeugt. Eine einstückige Herstellung ist das Ergebnis, wobei der mischende Lichtleiter 5 wie zuvor beschrieben optisch ausgebildet ist mit mindestens drei verschiedenen Regionen 25, 26, 27.

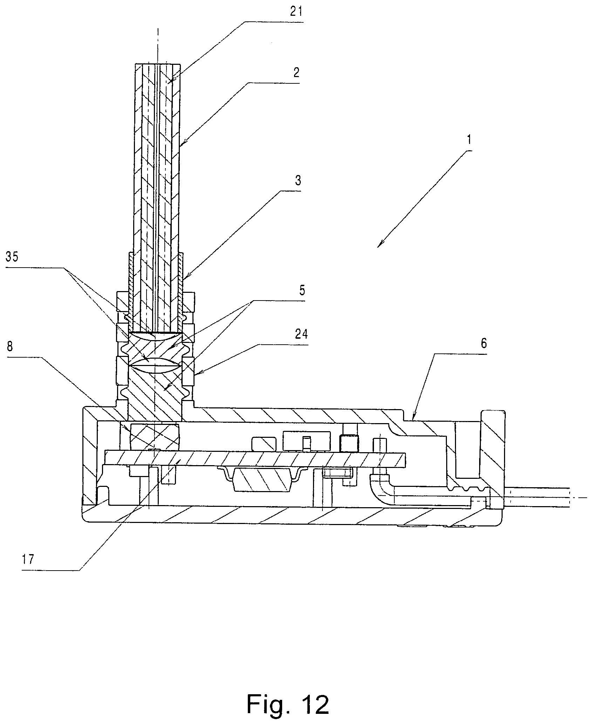

Fig. 12 zeigt ein weiteres Ausführungsbeispiel (Variante 9) einer Beleuchtungsvorrichtung 1, das nicht Teil der beanspruchten Erfindung ist. . Abweichend von Varianten 1 bis 8 fungiert hier ein Lichtleiter 5 als Lichtmischer 20, der kombiniert ist mit einem oder mehreren Linsenelementen 16, die ebenfalls in dem Hohlkörper-Ausleger 24, insbesondere einem Dom, verbaut sind. Nicht über eine Raumform des Lichtleiters 5, sondern durch das Einlegen von Linsen 16 in den Lichtleiter 5 kann die gewünschte Homogenisierung des von der Lichtquelle 8 abgestrahlten Lichts mit hoher Intensität erreicht werden. Vorteilhaft ist hier die Minimierungsmöglichkeit einer RGB-LED-Modul-Größe sowie die mögliche Effizienzsteigerung.

Vorteilhaft sind hier mindestens zwei in Reihe angeordnete optische Linsen 35, die in den Lichtleiter 5 integriert sind.

Allen vorstehend beschriebenen Varianten ist gemeinsam, dass die Lichtquelle 8 benachbart einer ebenen Stirnfläche 23 (Fig. 1) eintrittsseitig des Lichtleiters 5 angeordnet ist und die Lichtquelle 8 und der Lichtleiter 5 mittig zueinander positioniert sind. Wie bereits ausgeführt, können als Lichtquelle 8 mehrfarbige LEDs, insbesondere RGB LEDs, verwendet werden. Ein- und auskoppelbar ist somit Licht mehrerer Wellenlängen, insbesondere Licht dreier unterschiedlicher Wellenlängen und/oder Licht der Farben rot, grün und blau.

Die LEDs und der Lichtleiter 5 sind dann vorzugsweise senkrecht zueinander positioniert. Der Lichtleiter 5 ist vorzugsweise gebildet aus einem Kunststoff wie beispielsweise PMMA oder Polycarbonat.

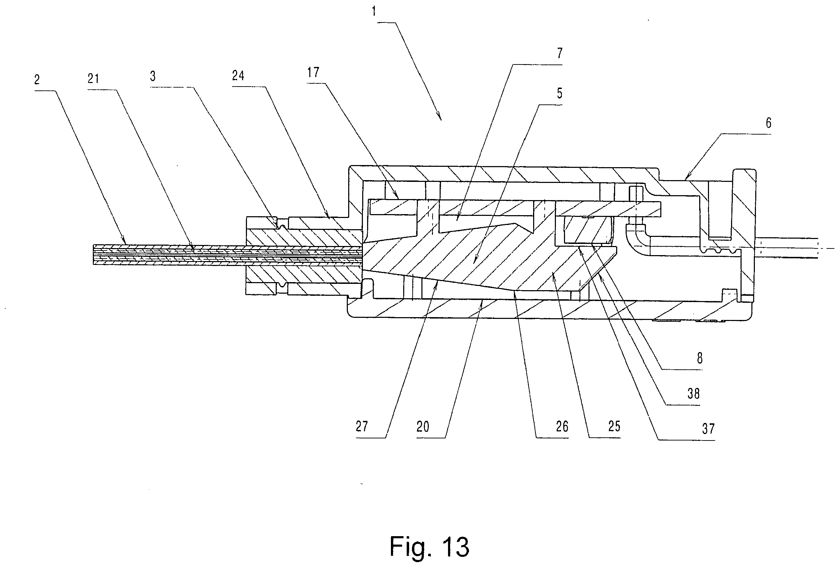

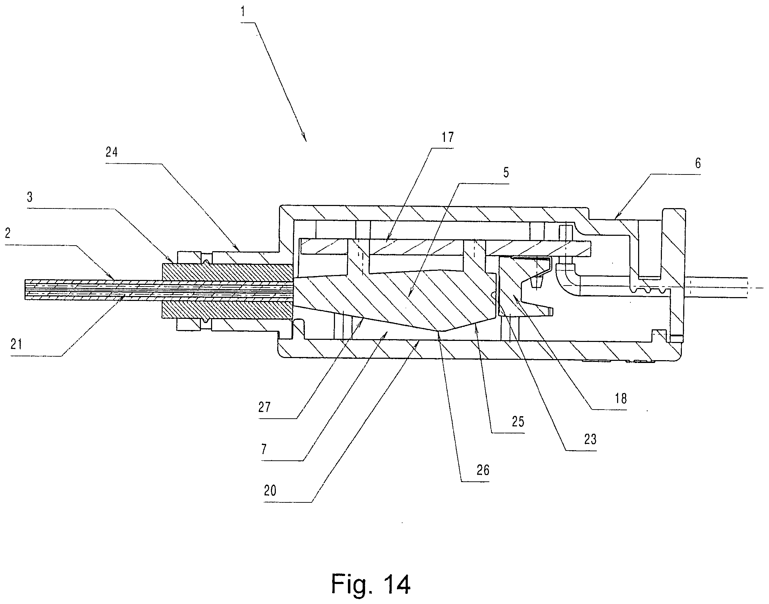

Die Fig. 13 und Fig. 14 betreffen nun Varianten 10 und 11, die nicht Teil der beanspruchten Erfindung sind, , bei denen eine horizontale Ausrichtung der Faserbündelanbindung unter Verwendung einer Umlenkoptik vorgesehen ist. Im Gegensatz zu den Varianten 1 bis 9, die eine vertikale Ausrichtung des Faserbündels 21 vorsehen, wird bei der in Fig. 13 dargestellten Variante 10 eine horizontale Anbindung vorgenommen. Das Licht wird durch einen horizontal auf die Platine 17 aufgesetzten mischenden Lichtleiter 5 mit Umlenkoptik gemischt eingeleitet in das Faserbündel 21. Der Hohlkörper-Ausleger 24 bildet eine axile Verlängerung des Gehäuses 6, und die Lichtquelle 8 strahlt seitlich auf den Lichtleiter 5, der dazu eine seitliche Lichteinkopplungsfläche 37 aufweist. Die Raumform des Lichtleiters 5 des Lichtmischers 20 kann im Übrigen wie vorstehend beschrieben mit Regionen 25, 26, 27 ausgebildet bleiben. Vorzugsweise wird der Lichteinkopplungsfläche 37 eine Reflexionszusatzfläche 38 zugeordnet, die für eine Strahlenumlenkung des eingeleiteten Lichts sorgt. Der um den Lichtleiter 5 vorteilhafte Luftraum 7 kann in dem Gehäuse 6 bereitgestellt werden.

Fig. 14 zeigt eine Beleuchtungsvorrichtung 1 gemäß einer Variante 11. Abweichend von Variante 10 ist die eingesetzte Lichtquelle 8 nicht eine vertikal abstrahlende Lichtquelle, sondern eine horizontal abstrahlende Lichtquelle 8, beispielsweise eine SIDE LED. Der Vorteil liegt in einer Minimierung der Umlenkverluste aus Variante 10 durch eine direkte Einleitung des Lichts in den Lichtleiter 54 des Lichtmischers 20.

Insgesamt ermöglichen die Varianten 10 und 11 einen erweiterten Einsatz unter schwierigen Bauraumbedingungen, da die schlank aufbauende Geometrie hier vorteilhafter sein kann.

## Patentansprüche

1. Beleuchtungsvorrichtung (1) mit einer in einem Gehäuse (6) angeordneten Lichtquelle (8), die Licht über einen einen kompakten Lichtleiter (5) aufweisender
Lichtmischer (20) in ein seitenemittierendes, in einen Schlauch (2) eingebrachtes Faserbündel (21) einkoppelt, wozu das Faserbündel (21) an seinem einen Ende (22) gegenüber dem Lichtmischer (20) fixiert ist, und die Lichtquelle (8) zur Stirnfläche (23) des Lichtmischers (20) positioniert ist, **dadurch gekennzeichnet, dass** das Gehäuse (6) einen von der Lichtquelle (8) bestrahlbaren Hohlkörper-Ausleger (24) aufweist, in den der Lichtleiter (5) des
Lichtmischers (20) eingebaut ist, der auf seiner Gesamtlänge mindestens drei verschiedene, in ihrer Raumform sich unterscheidende Regionen (25, 26, 27) mit unterschiedlichen optischen Reflexions- oder Übertragungseigenschaften aufweist, wobei der Hohlkörper-Ausleger (24) lichtundurchlässig ausgebildet ist und der Lichtleiter (5) transparent ausgebildet ist mit einem in Richtung der Lichtquelle (8) liegenden ersten Ende (25.1), einem in Richtung des Faserbündels (21) liegenden zweiten Ende (27.1) und einem dazwischenliegenden Übergangsbereich einer dritten Region (26), die dem Lichtleiter (5) einen mittigen stabförmigen Abschnitt verleiht, und der Lichtleiter (5) keulenförmig ausgebildet ist, wobei das erste Ende (25.1) eine erste Nennweite (qE) aufweist, die größer ist als eine zweite Nennweite (qA) des zweiten Endes (27.1) und die erste (qE) und die zweite (qA) Nennweite kleiner sind als eine dritte Nennweite (qV) des Übergangsbereichs der dritten Region (26) mit einer maximalen Verdickung einer Außenkontur des Lichtleiters (5), so dass die erste Region (25) einen axial sich erweiternden Querschnitt und die zweite Region (27) einen axial sich verjüngenden Querschnitt aufweisen.

2. Beleuchtungsvorrichtung (1) nach Anspruch 1, **dadurch gekennzeichnet, dass** der Lichtleiter (5) aus einem festen Material oder einem festen Außenmaterial und einem mit Fluid oder Gel gefüllten Innenraum besteht.

3. Beleuchtungsvorrichtung (1) nach Anspruch 1 oder 2, **dadurch gekennzeichnet, dass** eine Gesamtlänge des Lichtleiters (5) des Lichtmischers (20) das 3- bis 6-fache der dritten Nennweite (qV) des Übergangsbereichs einer dritten Region (26) mit maximaler Verdickung beträgt.

4. Beleuchtungsvorrichtung (1) nach einem der Ansprüche 1 bis 3, **dadurch gekennzeichnet, dass** der Lichtleiter (5) auf seiner Gesamtlänge mindestens teilweise beabstandet zu einer Innenwandung (28) des Hohlkörper-Auslegers (24) positioniert ist zur Ausbildung eines Luftraums (7) zwischen einer Außenfläche des Lichtleiters (5) und einer Innenwandung (28) des Hohlkörper-Auslegers (24) für eine Lichtreflexion im Lichtleiter (5) an dessen Außenkonturflächen.

5. Beleuchtungsvorrichtung (1) nach einem der Ansprüche 1 bis 4, **dadurch gekennzeichnet, dass** der Lichtleiter (5) des Lichtmischers (20) faserseitig eine Stirnfläche aufweist, die direkt stoßseitig an einem Ende (22) des Faserbündels (21) anschließt.

6. Beleuchtungsvorrichtung (1) nach einem der Ansprüche 1 bis 5, **dadurch gekennzeichnet, dass** ausgangsseitig des Hohlkörper-Auslegers (24) ein rohrförmiges, das Faserbündel (21) aufnehmendes Verschlusselement (3) einbringbar ist, mit dem das eine Ende (22) des in den Schlauch (2) eingebrachten Faserbündels (21) stoßseitig gegenüber dem in dem Hohlkörper-Ausleger (24) eingangsseitig eingebrachten Lichtmischer (20) positionierbar sind.

7. Beleuchtungsvorrichtung (1) nach Anspruch 6, **dadurch gekennzeichnet, dass** das Verschlusselement (3) und der Lichtmischer (20) in den Hohlkörper-Ausleger (24) einrastbar sind.

8. Beleuchtungsvorrichtung (1) nach Anspruch 1 bis 7, **dadurch gekennzeichnet, dass** eine optische Vergussmasse (11) den Lichtleiter (5) ausbildet, und die Anbindung des Faserbündels (21) in der Vergussmasse (11) erfolgt.

9. Beleuchtungsvorrichtung (1) nach Anspruch 8, **dadurch gekennzeichnet, dass** die optische Vergussmasse (11) mit einem Passsitz einer Innenkontur (28) des Hohlkörper-Auslegers (24) folgt.

10. Beleuchtungsvorrichtung (1) nach einem der Ansprüche 1 bis 9, **dadurch gekennzeichnet, dass** das Faserbündel (21) und der Lichtleiter (5) als eine Einheit (15) zum Lichtmischer (20) verschmolzen sind, der in den Hohlkörper-Ausleger (24) einrastbar ist.

11. Beleuchtungsvorrichtung (1) nach einem der Ansprüche 1 bis 10, **dadurch gekennzeichnet, dass** mindestens zwei in Reihe angeordnete optische Linsen (35) im Lichtleiter (5) verbaut sind.

12. Beleuchtungsvorrichtung (1) nach einem der Ansprüche 1 bis 11, **dadurch gekennzeichnet, dass** die Lichtquelle (8) benachbart einer ebenen Stirnfläche (23) eintrittsseitig des Lichtleiters (5) angeordnet ist und die Lichtquelle (8) und der Lichtleiter (5) mittig zueinander positioniert sind.

13. Beleuchtungsvorrichtung (1) nach einem der Ansprüche 1 bis 12, **dadurch gekennzeichnet, dass** als Lichtquelle (8) mehrfarbige LEDs verwendet werden.

14. Beleuchtungsvorrichtung (1) nach Anspruch 13, **dadurch gekennzeichnet, dass** die LEDs und der Lichtleiter (5) senkrecht zueinander positioniert sind.

15. Beleuchtungsvorrichtung (1) nach einem der Ansprüche 1 bis 14, **dadurch gekennzeichnet, dass** eine horizontale Ausrichtung der Faserbündelanbindung unter Verwendung einer Umlenkoptik (18, 37, 38) vorgesehen ist.

16. Beleuchtungsvorrichtung (1) nach einem der Ansprüche 1 bis 15, **dadurch gekennzeichnet, dass** die Lichtquelle (8) eine auf eine integrierte Platine (17) montierte RGB-LED ist.

17. Beleuchtungsvorrichtung (1) nach Anspruch 16, **dadurch gekennzeichnet, dass** der Lichtleiter (5) aus einem Kunststoff wie beispielsweise PMMA oder Polycarbonat gebildet ist.

## Claims

1. Lighting device (1) with a light source (8) arranged in a housing (6), which couples light via a light mixer (20) having a compact light guide (5) into a side-emitting fiber bundle (21) introduced into a tube (2), for which purpose the fiber bundle (21) is fixed at its one end (22) relative to the light mixer (20), and the light source (8) is positioned on the end face (23) of the light mixer (20), **characterized in that** the housing (6) has a hollow-body extension (24), which can be irradiated by the light source (8) and in which the light guide (5) of the light mixer (20) is installed, which has over its entire length at least three different regions (25, 26, 27) differing in their spatial shape and having different optical reflection or transmission properties, wherein the hollow body extension (24) is designed to be opaque and the light guide (5) is designed to be transparent with a first end (25. 1) lying in the direction of the light source (8), a second end (27.1) lying in the direction of the fiber bundle (21) and an intermediate transition region of a third region (26) which gives the light guide (5) a central rod-shaped section, and the light guide (5) is formed in the shape of a lobe, the first end (25.1) having a first nominal width (qE) which is larger than a second nominal width (qA) of the second end (27.1), and the first (qE) and the second (qA) nominal widths being smaller than a third nominal width (qV) of the transition region of the third region (26) with a maximum thickening of an outer contour of the light guide (5), so that the first region (25) has an axially widening cross section and the second region (27) has an axially tapering cross section.

2. Lighting device (1) according to claim 1, **characterized in that** the light guide (5) consists of a solid material or a solid outer material and an inner space filled with fluid or gel.

3. Lighting device (1) according to claim 1 or 2, **characterized in that** a total length of the light guide (5) of the light mixer (20) is 3 to 6 times the third nominal width (qV) of the transition region of a third region (26) with maximum thickening.

4. Lighting device (1) according to one of the claims 1 to 3, **characterized in that** the light guide (5) is at least partially spaced along its entire length from an inner wall (28) of the hollow body extension (24) is positioned to form an air space (7) between an outer surface of the light guide (5) and an inner wall (28) of the hollow body extension (24) for a light reflection in the light guide (5) at its outer contour surfaces.

5. Lighting device (1) according to one of the claims 1 to 4, **characterized in that** the light guide (5) of the light mixer (20) has an end face on the fiber side which directly adjoins one end (22) of the fiber bundle (21) on the butt side.

6. Lighting device (1) according to one of the claims 1 to 5, **characterized in that** a tubular closure element (3) receiving the fiber bundle (21) can be introduced on the outlet side of the hollow body extension (24), by means of which closure element one end (22) of the fiber bundle (21) introduced into the tube (2) can be positioned on the butt side opposite the light mixer (20) introduced on the inlet side in the hollow body extension (24).

7. Lighting device (1) according to claim 6, **characterized in that** the closure element (3) and the light mixer (20) can be snapped into the hollow body extension (24).

8. Lighting device (1) according to claim 1 to 7, **characterized in that** an optical potting compound (11) forms the light guide (5), and the bonding of the fiber bundle (21) takes place in the potting compound (11).

9. Lighting device (1) according to claim 8, **characterized in that** the optical potting compound (11) follows with a snug fit an internal contour (28) of the hollow body extension (24).

10. Lighting device (1) according to one of claims 1 to 9, **characterized in that** the fiber bundle (21) and the light guide (5) are fused as one unit (15) to form the light mixer (20), which can be snapped into the hollow body extension (24).

11. Lighting device (1) according to one of claims 1 to 10, **characterized in that** at least two optical lenses (35), arranged in series are installed in the light guide (5).

12. Lighting device (1) according to one of the claims 1 to 11, **characterized in that** the light source (8) is arranged adjacent to a planar end face (23) on the inlet side of the light guide (5) and the light source (8) and the light guide (5) are positioned centrally with respect to each other.

13. Lighting device (1) according to one of the claims 1 to 12, **characterized in that** multicolored LEDs are used as light source (8).

14. Lighting device (1) according to claim 13, **characterized in that** the LEDs and the light guide (5) are positioned perpendicular to one another.

15. Lighting device (1) according to one of claims 1 to 14, **characterized in that** a horizontal alignment of the fiber bundle bond is provided using a deflection optic (18, 37, 38).

16. Lighting device (1) according to one of claims 1 to 15, **characterized in that** the light source (8) is an RGB LED mounted on an integrated circuit board (17).

17. Lighting device (1) according to claim 16, **characterized in that** the light guide (5) is formed of a plastic such as PMMA or polycarbonate.

## Revendications

1. Dispositif d'éclairage (1) avec une source lumineuse (8) agencée dans un boîtier (6) qui injecte de la lumière par le biais d'un mélangeur de lumière (20) présentant un conduit de lumière (5) compact dans un faisceau de fibres (21) à émission latérale, introduit dans un tuyau (2), pour quoi le faisceau de fibres (21) est fixé à une extrémité (22) par rapport au mélangeur de lumière (20), et la source lumineuse (8) est positionnée par rapport à la face (23) du mélangeur de lumière (20), **caractérisé en ce que** le boîtier (6) présente une flèche de corps creux (24) pouvant être irradiée par la source lumineuse (8), dans laquelle le conduit de lumière (5) du mélangeur de lumière (20) est installé, lequel présente sur sa longueur entière au moins trois différentes régions (25, 26, 27) se distinguant dans leur forme spatiale par différentes propriétés de réflexion ou de transmission optiques, dans lequel la flèche de corps creux (24) est réalisée de manière imperméable à la lumière et le conduit de lumière (5) est réalisé de manière transparente avec une première extrémité (25.1) se trouvant en direction de la source lumineuse (8), une seconde extrémité (27.1) se trouvant en direction du faisceau de fibres (21) et une zone de transition se trouvant au milieu d'une troisième région (26) qui confère au conduit de lumière (5) une section médiane en forme de barre, et le conduit de lumière (5) est réalisé en forme de lobe, dans lequel la première extrémité (25.1) présente une première largeur nominale (qE) qui est supérieure à une seconde largeur nominale (qA) de la seconde extrémité (27.1) et la première (qE) et la deuxième (qA) largeur nominale sont inférieures à une troisième largeur nominale (qV) de la zone de transition de la troisième région (26) avec un épaississement maximal d'un contour extérieur du conduit de lumière (5) de sorte que la première région (25) présente une section transversale s'élargissant axialement et la seconde région (27) présente une section transversale se rétrécissant axialement.

2. Dispositif d'éclairage (1) selon la revendication 1, **caractérisé en ce que** le conduit de lumière (5) se compose d'un matériau solide ou d'un matériau extérieur solide et d'un espace intérieur rempli de fluide ou de gel.

3. Dispositif d'éclairage (1) selon la revendication 1 ou 2, **caractérisé en ce qu'**une longueur entière du conduit de lumière (5) du mélangeur de lumière (20) est comprise entre 3 et 6 fois la troisième largeur nominale (qV) de la zone de transition d'une troisième région (26) avec un épaississement maximal.

4. Dispositif d'éclairage (1) selon l'une quelconque des revendications 1 à 3, **caractérisé en ce que** le conduit de lumière (5) est positionné sur sa longueur entière au moins partiellement à distance d'une paroi intérieure (28) de la flèche de corps creux (24) pour la réalisation d'un espace d'air (7) entre une surface extérieure du conduit de lumière (5) et une paroi intérieure (28) de la flèche de corps creux (24) pour une réflexion de lumière dans le conduit de lumière (5) sur ses surfaces de contour extérieur.

5. Dispositif d'éclairage (1) selon l'une quelconque des revendications 1 à 4, **caractérisé en ce que** le conducteur lumineux (5) du mélangeur de lumière (20) présente côté fibre une face qui se raccorde directement côté aboutement à une extrémité (22) du faisceau de fibres (21).

6. Dispositif d'éclairage (1) selon l'une quelconque des revendications 1 à 5, **caractérisé en ce qu'**un élément de fermeture (3) recevant le faisceau de fibres (21) tubulaire peut être introduit côté sortie de la flèche de corps creux (24), avec lequel l'une extrémité (22) du faisceau de fibres (21) introduit dans le tuyau (2) peut être positionnée côté aboutement par rapport au mélangeur de lumière (20) introduit côté entrée dans la flèche de corps creux (24).

7. Dispositif d'éclairage (1) selon la revendication 6, **caractérisé en ce que** l'élément de fermeture (3) et le mélangeur de lumière (20) peuvent être encliquetés dans la flèche de corps creux (24).

8. Dispositif d'éclairage (1) selon la revendication 1 à 7, **caractérisé en ce qu'**une masse de scellement (11) optique réalise le conduit de lumière (5) et la liaison du faisceau de fibres (21) dans la masse de scellement (11) est effectuée.

9. Dispositif d'éclairage (1) selon la revendication 8, **caractérisé en ce que** la masse de scellement (11) optique suit avec un siège ajusté un contour intérieur (28) de la flèche de corps creux (24).

10. Dispositif d'éclairage (1) selon l'une quelconque des revendications 1 à 9, **caractérisé en ce que** le faisceau de fibres (21) et le conduit de lumière (5) sont fondus comme une unité (15) en mélangeur de lumière (20) qui peut être encliqueté dans la flèche de corps creux (24).

11. Dispositif d'éclairage (1) selon l'une quelconque des revendications 1 à 10, **caractérisé en ce qu'**au moins deux lentilles (35) optiques agencées en série sont installées dans le conduit de lumière (5).

12. Dispositif d'éclairage (1) selon l'une quelconque des revendications 1 à 11, **caractérisé en ce que** la source lumineuse (8) est agencée de manière contigüe à une face plane (23) côté entrée du conduit de lumière (5) et la source lumineuse (8) et le conduit de lumière (5) sont positionnés au milieu l'un de l'autre.

13. Dispositif d'éclairage (1) selon l'une quelconque des revendications 1 à 12, **caractérisé en ce que** des DEL multicolores sont utilisées comme source lumineuse (8).

14. Dispositif d'éclairage (1) selon la revendication 13, **caractérisé en ce que** les DEL et le conduit de lumière (5) sont positionnés perpendiculairement les uns aux autres.

15. Dispositif d'éclairage (1) selon l'une quelconque des revendications 1 à 14, **caractérisé en ce qu'**une orientation horizontale de la liaison de faisceau de fibres est prévue en utilisant une optique de renvoi (18, 37, 38).

16. Dispositif d'éclairage (1) selon l'une quelconque des revendications 1 à 15, **caractérisé en ce que** la source lumineuse (8) est une DEL RVB montée sur une platine intégrée (17).

17. Dispositif d'éclairage (1) selon la revendication 16, **caractérisé en ce que** le conducteur lumineux (5) est formé d'une matière synthétique telle que du PMMA ou du polycarbonate.
